Europäisches Patentamt

European Patent Office

Office européen des brevets

(19)

(11) Veröffentlichungsnummer: **0 254 130**

**A1**

(12) **EUROPÄISCHE PATENTANMELDUNG**

(21) Anmeldenummer: **87109823.2**

(22) Anmeldetag: **08.07.87**

(51) Int. Cl.³: **B 27 K 3/50**
**B 27 K 3/15**

(30) Priorität: **15.07.86 AT 1916/86**

(43) Veröffentlichungstag der Anmeldung:
**27.01.88 Patentblatt 88/4**

(84) Benannte Vertragsstaaten:
**BE CH DE ES FR GB IT LI NL SE**

(71) Anmelder: **Vianova Kunstharz Aktiengesellschaft**

**A-8402 Werndorf(AT)**

(72) Erfinder: **Dworak, Gert, Dr. Chem.**
**Dr. Robert Grafstrasse 25**
**A-8010 Graz(AT)**

(74) Vertreter: **Majcen, Hilde, Dr. et al,**
**Vianova Kunstharz AG Patentabteilung Leechgasse 21**
**Postfach 191**
**A-8011 Graz(AT)**

(54) **Wässrige Holzimprägnierungsmittel.**

(57) Die Erfindung betrifft wäßrige Imprägnierungsmittel für Holz oder Holzwerkstoffe auf der Basis von Kombinationen von Salzen verschiedener Addukte von Maleinsäureanhydrid an trocknende Öle und/oder die solche Öle aufbauende ungesättigte Fettsäuren und/oder an hydroxylfreie synthetisch hergestellte Ester dieser Fettsäuren mit Di- oder Polyolen, wobei sich die Kombinationspartner Di- oder Polyolen, wobei sich die Kombinationspartner durch ein verschiedenes Penetrationsverhalten unterscheiden.

Die erfindungsgemäßen Kombinationen zeigen verbesserte Eigenschaften in bezug auf die Wetterfestigkeit und verringerte Anfälligkeit gegenüber Rißbildung, auch bei Verwendung als Grundanstrich unter einer üblichen Holzlasur.

EP 0 254 130 A1

# Wäßrige Holzimprägnierungsmittel

Die Erfindung betrifft wäßrige Imprägnierungsmittel für Holz oder Holzwerkstoffe auf der Basis von Kombinationen von Salzen verschiedener Addukte von Maleinsäureanhydrid an trocknende Öle und/oder die solche Öle aufbauende ungesättigte Fettsäuren und/oder an hydroxylfreie synthetisch hergestellte Ester dieser Fettsäuren mit Di- oder Polyolen, wobei sich die Kombinationspartner durch ein verschiedenes Penetrationsverhalten unterscheiden.

Holz oder Holzwerkstoffe werden seit langem mit verschiedenen Imprägnierungsmitteln behandelt, um die Anfälligkeit dieses Materials gegen Pilz-, Bakterien- oder Insektenbefall sowie gegen den Einfluß von Schwankungen des Feuchtigkeitsgehaltes zu verringern. Derartige Holzschutzmittel, welche vorteilhafterweise auswasch- bzw. diffusionsfest sein sollen, werden entweder direkt aus wäßriger Emulsion oder wäßriger Lösung oder aus Lösungen in organischen Lösemitteln aufgebracht. Gegebenenfalls werden zur Verbesserung der feuchtigkeitsregulierenden Wirkung auch wäßrige Polymerdispersionen oder Alkydharzlösungen in Lösemitteln und/ oder Wasser der Imprägnierung zugesetzt. Bei allen diesen Systemen ist die Eindringtiefe des Mittels in das Holz nicht ausreichend, um die gewünschten Effekte zu gewährleisten. Unterstützende Zusätze wie Netzmittel erhöhen zwar die Eindringtiefe, sind aber nachteilig, z. B. bezüglich der Auswaschbarkeit oder der Feuchtigkeitsregulierung.

Aus der DE 28 38 930 - C 2 bzw. der EP 0 137 126-A 1 sind wäßrige Imprägnierungsmittel für Holz und Holzwerkstoffe auf der Basis von niedrigmolekularen Dien(co)polymerisaten, welche durch entsprechende Modifizierung in eine wasserlösliche Form übergeführt werden, bekannt. Gemäß der DE 28 38 930-C 2 werden epoxidierte Butadienpolymere mit Aminen umgesetzt und die Reaktionsprodukte durch Salzbildung mit Säuren wasserverdünnbar gemacht. Die mangelhafte Trocknung dieser Produkte soll gemäß EP 0 137 126 - A 1 dadurch verbessert werden, daß man anstelle der kationischen Aminaddukte carboxylierte Dienpolymerisate, welche durch Salzbildung mit Basen wasserverdünnbar gemacht werden, einsetzt.

Produkte auf Basis von Dienpolymerisaten zeigen zwar gegenüber dem vorher genannten Stand der Technik Vorteile bezüglich der Eindringtiefe, ein großer Nachteil liegt jedoch in einer sehr mangelhaften Wetterbeständigkeit, woraus eine Vergrauung der imprägnierten Holzoberfläche resultiert. Überdies weisen Imprägnierungen auf dieser Basis auch nach dem Trocknen einen unangenehmen Geruch auf, der eine Verwendung in geschlossenen Räumen als nicht günstig erscheinen läßt.

Es wurde nun gefunden, daß man Imprägnierungen von ausgezeichneter Qualität und optimaler Dauerwirksamkeit erhält, wenn das Imprägnierungsmittel als Träger Mischungen ausgewählter wasserlöslicher Salze von Addukten von Maleinsäureanhydrid an trocknende Öle und/oder an ungesättigte Fettsäuren und/oder deren hydroxylfreie Ester bzw. Salze entsprechender Addukthalbester mit Monoalkoholen enthält, wobei die Komponenten der Mischung durch eine unterschiedliche Eindringtiefe gekennzeichnet sind.

Die Erfindung betrifft demgemäß wäßrige Imprägnierungsmittel für Holz oder Holzwerkstoffe enthaltend ein wasserlösliches Trägermaterial und Holzschutzwirkstoffe sowie in der Imprägniertechnik übliche Zusatzstoffe, welche dadurch gekennzeichnet sind, daß das wasserliche Trägermaterial aus Mischungen von Addukten von Maleinsäureanhydrid an trocknende Öle und/oder an die solche Öle aufbauenden ungesättigten Fettsäuren und/oder an hydroxylfreie synthetisch hergestellte Ester dieser Fettsäuren mit Di- oder Polyolen, deren Anhydridstrukturen durch Wasser und/oder vorzugsweise durch Monoalkohole mit 1 bis 10 Kohlenstoffatomen aufgeschlossen sind, und deren einer Säurezahl von 40 bis 280 mg KOH/g entsprechende Carboxylgruppen teilweise oder vollständig mit Basen neutralisiert sind, besteht, mit der Maßgabe, daß die Kombination mindestens eine Komponente mit einem Penetrationswert, wie in der Beschreibung definiert, von weniger als 2 Stunden und mindestens eine zweite Komponente mit einem Penetrationswert von mehr als 2 1/2 Stunden enthält.

Als Penetrationswert wird die Zeit angegeben, welche eine 18%ige wäßrige Lösung eines Kaliumsalzes des Addukts benötigt, um eine spezifizierte Filterplatte (s. unten) in der Größe 50 x 100 mm, welche auf der Schmalseite in einem 250 ccm-Becherglas steht, voll zu benetzen, wobei die Menge der Imprägnierlösung im Becherglas 25 g beträgt (z. B. 60 Min./100%). Überschreitet diese Zeit 2,5 Stunden, wird die nach dieser Zeit benetzte Fläche in Prozenten angegeben (z. B. 2,5 Stunden/80%). Die für die Ermittlung des Penetrationswertes verwendete Filterplatte ist ein Grobklärschichtfilter, wie es in der Kunstharzindustrie verwendet wird. Nach Herstellerangaben (Fa. Seitz Filterwerke D-6550 Bad Kreuznach) besteht die Filterplatte aus Zellstoff und Chrysotil-Fasern. Die Platte weist einen Filtereffekt - 4 auf (definiert durch eine 10-teilige Skala: Wert "1" Trenngrenze ca. 10 µm, Wert "10" Trenngrenze ca. 0,1 µm). Die Filtriergeschwindigkeit wird mit ca. 300 l m$^{-2}$ min$^{-1}$ für Wasser bei 20°C und $\triangle$ p = 0,2 bar angegeben. Als Hilfslösemittel kann die Salzlösung

- 4 -

bis zu max. 20 % eines Glykolethers, vorzugsweise Diethylenglykolmonoethylether, enthalten.

Die Mischung von Adduktsalzlösungen mit unterschiedlichem Penetrationswert bewirkt eine durch die verschiedene Eindringtiefe bedingte Fraktionierung und damit eine gleichmäßige Verteilung der Imprägnierung. Die schädlingsbekämpfende Wirkung, ebenso die Feuchtigkeitsregulierung, ist damit sowohl in der Nähe der Oberfläche gegeben, als auch, bedingt durch hohe Eindringtiefe der zweiten Komponente, über einen großen Bereich im Inneren des Holzes gleichmäßig verteilt. Die Produkte benötigen nur geringe Anteile an Hilfslösemitteln und weisen weder beim Auftrag noch später einen unangenehmen Geruch auf.

Der Penetrationswert kann nur in beschränktem Umfang mit der Viskosität des dem Adduktsalz zugrundeliegenden Addukts in Zusammenhang gebracht werden, sodaß eine Vorhersage des Penetrationsvermögens in der Mehrzahl der Fälle nicht möglich ist.

Als Adduktsalze werden für die Produkte gemäß der vorliegenden Erfindung partiell oder vollständig mit Basen neutralisierte Anlagerungsverbindungen von Maleinsäureanhydrid (MSA) an trocknende Öle und/oder an die solche Öle aufbauenden ungesättigten Fettsäuren und/oder an hydroxylfreie synthetisch hergestellte -Ester dieser Fettsäuren mit Di- oder Polyolen herangezogen. Die Anhydridstrukturen werden vor der Neutralisation durch Umsetzung mit Waser und/oder Monoalkoholen mit 1 bis 10 C-Atomen geöffnet.

Zur Adduzierung werden natürliche trocknende Öle sowie aus natürlichen Ölen durch Polymerisation oder Dehydra-

- 5 -

tisierung u. ä. erhaltene Produkte mit einer Jodzahl von mindestens 100 eingesetzt. Vorzugsweise enthalten diese Öle, wie Leinöl, Sojaöl oder dehydratisiertes Rizinusöl im wesentlichen Fettsäuren mit isolierten Doppelbindungen. Konjuenöle, wie Holzöl u. ä. können im untergeordneten Maß enthalten sein. Konjuenöle können bei der Herstellung der Addukte zum Abfangen der Reste von nichtadduziertem Maleinsäureanhydrid dienen.

Die in diesen Ölen enthaltenen ungesättigten Fettsäuren oder deren Gemische können ebenfalls zur Adduzierung herangezogen werden. Mit diesen Ausgangsstoffen werden besonders niedrigviskose Addukte erhalten. Weiters können auch hydroxylfreie Ester dieser Säuren mit Diolen, wie Ethylenglykol und dessen Homologen bzw. die Ethergruppen aufweisenden Polymere dieser Glykole, und mit Polyolen, wie Trimethylolethan oder -propan eingesetzt werden. Die Ester müssen für eine einwandfreie Adduzierung des Maleinsäureanhydrids weitgehend frei von unveresterten Hydroxylgruppen sein.

Der Anteil an Maleinsäureanhydrid in den Addukten beträgt zwischen 5 und 30 Gew.-%, wobei bei Fettsäureestern der Bereich vorzugsweise zwischen 10 und 25 Gew.-%, bei Fettsäuren zwischen 20 und 30 Gew.-% liegt.

Die Anhydridstrukturen der Addukte werden mit Wasser, gegebenenfalls in Gegenwart von Katalysatoren, z. B. einem tertiären Amin, hydrolisiert. Vorzugsweise erfolgt die Öffnung der Anhydridstruktur durch Halbesterbildung mit Monoalkoholen mit 1 bis 10 Kohlenstoffatomen. Besonders vorteilhaft sind für die vorliegende Erfindung Addukthalbester, welche als Monoalkoholkomponente Glykolmonoether, Diglykolmonoether oder Triglykolmonoether aufweisen.

Die unterschiedlichen Eigenschaften der Adduktverbindungen können durch entsprechende Auswahl (a) der Öl- bzw. Fettsäurekomponenten, (b) der Maleinsäureanhydridmenge und (c) durch die Art der Öffnung der Anhydridringe erreicht werden.

Für die erfindungsgemäßen Kombinationen werden sowohl Mischungen von hochmaleinisierten Fettsäureestern (20 bis 25 Gew.-% Maleinsäureanhydrid) mit niedrigmaleinisierten Fettsäureestern (10 bis 12,5 Gew.-% Maleinsäureanhydrid) oder entsprechende Gemische maleinisierter Fettsäuren (25 bis 30 Gew.-% bzw. 20 bis 25 Gew.-% Maleinsäureanhydrid), als auch Gemische von niedrigmaleinisierten Fettsäureestern und hochmaleinisierten Fettsäuren eingesetzt.

Zur Erzielung der Wasserlöslichkeit werden die Adduktverbindungen allein oder bereits in Mischung partiell oder vollständig unter Salzbildung mit anorganischen oder organischen Basen, wie Alkalihydroxiden, Ammoniak oder organischen Aminen, vorzugsweise tertiären oder sekundären Aminen bzw. Alkanolaminen, neutralisiert. Der Grad der Neutralisation ist durch die Stabilität der verdünnten wäßrigen Lösung gegeben.

Die Mischung der Komponenten kann in weiten Grenzen variiert werden. Vorzugsweise sollen die Kombinationen in einem Rahmen liegen, daß weder der gut penetrierende Anteil allein, noch der schlecht penetrierende Anteil allein weniger als 30 Gew.-% (bezogen auf Festharz) beträgt. Besonders bevorzugt sind Mischungen, in denen der gut penetrierende Anteil 50 bis 70 Gew.-% beträgt.

- 7 -

Die Imprägnierungen enthalten neben dem Trägermaterial, dem Wasser und gegebenenfalls Hilfslösemitteln, die üblichen Holzschutzwirkstoffe sowie gegebenenfalls Pigmente und Hilfsstoffe, wie Hautverhinderungsmittel, Stabilisatoren, Netzmittel u. ä. Diese Zusatzmittel sowie die Formulierung von Imprägnierungen für die verschiedenen Hölzer und Holzwerkstoffe sind dem Fachmann bekannt oder können der einschlägigen Literatur entnommen werden. Die Imprägnierungen werden üblicherweise nach einer ausreichenden Trocknungszeit mit einer Holzlasur überstrichen.

Die folgenden Beispiele erläutern die Erfindung, ohne sie in ihrem Umfang zu beschränken. Alle Angaben in Teilen oder Prozenten beziehen sich, soferne nichts anderes angegeben ist, auf Gewichtseinheiten.

Herstellung der Maleinsäure-Addukte:

ADD 1: 675 Tle dehydratisiertes Rizinusöl (DCO) und 225 Tle Leinöl werden auf 240°C unter Inertgas erhitzt und bei dieser Temperatur 1 Stunde gehalten. Nach Kühlen auf 200°C werden 100 Tle Maleinsäureanhydrid (MSA) zugesetzt und die Temperatur auf 210°C eingestellt. Nach ca. 4 Stunden Reaktionszeit ist das MSA praktisch vollständig gebunden. Bei 100°C wird der Ansatz mit einer Mischung aus 160 Tlen Diethylenglykolmonobutylether und 2 Tlen Triethylamin (TEA) versetzt und die Reaktion bei 100°C bis zu einer Säurezahl von ca. 48 mg KOH/g geführt. Der Ansatz wird mit Diproyplenglykolmonomethylether (DPM) auf einen Festkörpergehalt von 90 % verdünnt. Die Viskosität dieser Lösung beträgt 1,09 Pa.s/20°C, der Penetrationswert 2,5 Stunden / 88 %.

- 8 -

Die Bestimmung des Penetrationswertes der Adduktverbindungen ADD 1 bis ADD 10 wird in folgender Weise
durchgeführt:

Eine wäßrige Adduktsalzlösung wird aus der 90%igen
Adduktlösung durch Verdünnen mit 5 Gew.-% (bezogen auf
Festharz) Diethylenglykolmonoethylether und Zugabe
einer 50%igen Kaliumhydroxidlösung und Wasser hergestellt,
sodaß eine 18%ige Lösung mit einem pH-Wert von 8,5 bis
9,5 resultiert.

25 g dieser Lösung werden in ein 250 ml Becherglas
(Durchmesser ca. 6 cm) gegeben und in diese Lösung
eine 100 x 50 mm große Filterplatte des in der Beschreibung spezifizierten Typs, z. B. SEITZ K 900 (Seitz
Filterwerke, D-6550, Bad Kreuznach) hineingestellt.
Bestimmt wird die Zeit, nach welcher die Platte vollständig durchtränkt ist (Angabe: Minuten / 100 %) bzw. der
Durchtränkungsgrad nach 2,5 Stunden (Angabe: 2,5
Stunden / % der Fläche durchtränkt). Die Meßtemperatur
beträgt 20 bis 25°C.

ADD 2: Es wird ein DCO/Leinöl/MSA-Addukt gemäß ADD 1
hergestellt. Nach vollständiger Bindung des MSA werden
die Anhydridgruppen durch portionsweise Zugabe von 30
Tlen Wasser und 3 Tlen TEA bei 90 bis 95°C ca. 2
Stunden aufgeschlossen. Sobald die Säuezahl ca. 85 mg
KOH/g erreicht hat, wird der Ansatz mit DPM auf einen
Festkörpergehalt von 90 % verdünnt. Die Viskosität der
Lösung beträgt 3,71 Pa.s/20°C, der Penetrationswert 70
Minuten / 100 %.

ADD 3: 975 Tle DCO und 325 Tle Leinöl werden, wie
bei ADD 1 angegeben, mit 100 Tlen MSA bis zur vollständigen Bindung des MSA reagiert. Bei 100°C werden
portionsweise 30 Tle Wasser und 3 Tle TEA zugegeben und

- 9 -

die Aufschlußreaktion bis zu einer Säurezahl von ca. 56 mg KOH/g geführt. Der Ansatz wird dann mit DPM auf einen Festkörpergehalt von 90 % verdünnt. Die Viskosität der Lösung beträgt 1,41 Pa.s/20°C, der Penetrationswert 2,5 Stunden /60 %.

ADD 4: Analog ADD 1 wird ein Addukt hergestellt und bei 80°C durch portionsweise Zugabe einer Mischung aus 35 Tlen Methanol und 2 Tlen TEA und einstündiger Reaktion bei 90°C aufgeschlossen. Die Säurezahl des Produkts beträgt 56 mg KOH/g. Der Ansatz wird mit DPM auf einen Festkörpergehalt von 90 % eingestellt. Die Viskosität der Lösung beträgt 1,64 Pa.s/20°C, der Penetrationswert 2,5 Stunden / 97 %.

ADD 5: 280 Tle Tallölfettsäure werden mit 100 Tlen MSA bei 210°C bis zur vollständigen Bindung des MSA reagiert. Bei ca. 90°C wird portionsweise eine Mischung aus 35 Tlen Methanol und 2 Tlen TEA zugegeben und diese Temperatur gehalten, bis eine Säurezahl von 245 mg KOH/g erreicht ist. Das Produkt weist einen Festkörpergehalt von ca. 96 % auf. Die Viskosität der 90%igen Lösung in DPM beträgt 1,88 Pa.s/ 20°C, der Penetrationswert 30 Minuten / 100 %.

ADD 6 : Zu 380 Tlen des gemäß ADD 5 hergestellten nicht aufgeschlossenen Addukts wird eine Mischung aus 162 Tlen Diethylenglykolmonobutylether (BUDIGL) und 3 Tlen TEA zugegeben und die Reaktion bis zu einer Säurezahl von ca. 200 mg KOH/g geführt. Das Produkt weist einen Harzfestkörper von 88 % auf. Die Viskosität der Lösung beträgt 0,71 Pa.s/20°C, der Penetrationswert 2,5 Stunden/88 %.

ADD 7 : Analog ADD 1 wird ein Addukt hergestellt, welches bei 90°C durch portionsweise Zugabe einer Mischung aus 144 Tlen technischem Nonanol und 2 Tlen TEA aufgeschlossen wird. Säurezahl ca. 47 mg KOH/g. Der Ansatz wird zu Weiterverarbeitung mit DPM auf einen Festkörpergehalt von 90 % verdünnt. Die Viskosität der Lösung beträgt 0,99 Pa.s/20°C, der Penetrationswert 2,5 Stunden / 90 %.

ADD 8 : 868 Tle Leinölfettsäure werden bei 230°C mit 134 Tlen Trimethylolpropan bis zu einer Säurezahl von unter 10 mg KOH/g verestert. Nach Kühlen auf 180°C werden 100 Tle MSA zugesetzt und die Adduzierung bei 210°C durchgeführt. Bei 100°C wird eine Mischung aus 160 Tlen BUDIGL und 2 Tlen TEA zugesetzt und der Aufschluß bei 100°C bis zu einer Säurezahl von ca. 45 mg KOH/g geführt. Der Ansatz wird mit DPM auf 90 % eingestellt. Viskosität 0,79 Pa.s/20°C, Penetrationswert 60 Minuten / 100 %.

ADD 9 : Analog wie in ADD 1 beschrieben, wird ein Addukt aus 230 Tlen Leinöl, 70 Tlen dehydratisiertem Rizinusöl und 100 Tlen MSA hergestellt und die Anhydridgruppen mit je 50 Mol-% BUDIGL und 50 Mol-% Wasser aufgeschlossen. Der Ansatz wird mit DPM auf 90 % Festkörpergehalt verdünnt. Viskosität 28,5 Pa.s/20°C, Penetrationswert 2 Stunden / 100 %.

ADD 10: Ein analog ADD 9 hergestelltes Addukt wird mit 100 Mol-% Wasser aufgeschlossen und mit DPM auf 90 % Festkörpergehalt verdünnt. Viskosität 520 Pa.s/20°C, Penetrationswert 70 Minuten / 100 %.

Beispiele 1 bis 8:
Aus den Adduktlösungen ADD 1 bis ADD 10 werden Imprägnierungslösungen wie folgt hergestellt:

- 11 -

111 Tle    Mischung von Adduktlösungen, 90%ig
 10 Tle    Kaliumhydroxidlösung, 50%ig
 10 Tle    Diethylenglykolmonoethylether
  8 Tle    Cobalt-Siccativ (1 % Metallgehalt)
  2 Tle    Hautverhinderungsmittel (Oximbasis)
 30 Tle    Wasser

werden gründlich vermischt und mit Wasser auf einen Festkörpergehalt von 15 % eingestellt. Vor der Verwendung wird der pH-Wert mit KOH auf 9 bis 10 eingestellt. Es resultieren opaleszente bis leicht trübe Lösungen.

Die Zusammensetzungen der Adduktmischungen sind in der folgenden Tabelle zusammengestellt.

| Beispiel | % ADDUKT , 90 %ig (ADD) | | | | | | | | | |
|---|---|---|---|---|---|---|---|---|---|---|
|  | 1 | 2 | 3 | 4 | 5 | 6 | 7 | 8 | 9 | 10 |
| 1 | 30 | 70 | | | | | | | | |
| 2 | | | 40 | | 60 | | | | | |
| 3 | | | | 30 | 20 | | 15 | | | 35 |
| 4 | | | | 50 | | | | | | 50 |
| 5 | | | | | | 30 | | 70 | | |
| 6 | | | 70 | | | | | | 30 | |
| 7 | | | 50 | | 30 | | | | 20 | |
| 8 | 20 | | | | | 20 | | 60 | | |

0254130

Die gemäß Beispiel 1 bis 8 hergestellten Imprägnierungen wurden durch Streichen auf Fichtenholzplatten (300 x 150 x 20 mm) appliziert. Alle Platten werden nach 24 Stunden mit einer handelsüblichen Holzlasur überstrichen. Die Prüfplatten zeigen nach einer Freibewitterung von 6 Monaten keine wesentliche Veränderung der Oberfläche bzw. Rißbildung.

Bei vergleichweisen Versuchen unter ausschließlicher Verwendung der Adduktlösungen ADD 1 und 3 bzw. ADD 5 und 8 zeigt sich bei den schlechtpenetrierenden Typen bei gleicher Prüfung beginnende Rißbildung bzw. bei den gut penetrierenden Typen Verwitterung der Oberfläche.

- 13 -

Patentansprüche:

1. Wäßriges Imprägnierungsmittel für Holz oder Holzwerkstoffe enthaltend ein wasserlösliches Trägermaterial und Holzschutzwirkstoffe sowie in der Imprägniertechnik übliche Zusatzstoffe, dadurch gekennzeichnet, daß das wasserlösliche Trägermaterial aus Mischungen von Addukten von Maleinsäureanhydrid an trocknende Öle und/oder an die solche Öle aufbauenden ungesättigten Fettsäuren und/oder an hydroxylfreie synthetisch hergestellte Ester dieser Fettsäuren mit Di- oder Polyolen, deren Anhydridstrukturen durch Wasser und/oder vorzugsweise durch Monoalkohole mit 1 bis 10 Kohlenstoffatomen aufgeschlossen sind, und deren einer Säurezahl von 40 bis 280 mg KOH/g entsprechende Carboxylgruppen teilweise oder vollständig mit Basen neutralisiert sind, besteht, mit der Maßgabe, daß die Kombination mindestens eine Komponente mit einem Penetrationswert, wie in der Beschreibung definiert, von weniger als 2 Stunden und mindestens eine zweite Komponente mit einem Penetrationswert von mehr als 2 1/2 Stunden enthält.

2. Wäßriges Imprägnierungsmittel nach Anspruch 1, dadurch gekennzeichnet, daß die Addukte im wesentlichen auf Fettsäuren oder Fettsäureresten mit isolierten Doppelbindungen basieren.

3. Wäßriges Imprägnierungsmittel nach den Ansprüchen 1 und 2, dadurch gekennzeichnet, daß die Addukte im untergeordneten Maß Fettsäuren oder Fettsäurereste mit konjugierten Doppelbindungen aufweisen.

4. Wäßriges Imprägnierungsmittel nach den Ansprüchen 1 bis 3, dadurch gekennzeichnet, daß die Addukte einen Anteil an Maleinsäureanhydrid von 5 bis 30 Gew.-%, vorzugsweise von 10 bis 25 Gew.-% bei Fettsäureestern und 20 bis 30 Gew.-% bei Fettsäuren aufweisen.

5. Wäßriges Imprägnierungsmittel nach den Ansprüchen 1 bis 4, dadurch gekennzeichnet, daß entweder der gut penetrierende Anteil oder der schlecht penetrierende Anteil mindestens 30 Gew.-% der Kombination beträgt.

6. Wäßriges Imprägnierungsmittel nach den Ansprüchen 1 bis 5, dadurch gekennzeichnet, daß der gut penetrierende Anteil in einer Menge von 50 bis 70 Gew.-% in der Kombination vorliegt.

7. Verwendung des wäßrigen Imprägnierungsmittels nach den Ansprüchen 1 bis 6 als Grundierungsmaterial für einen Holzschutzaufbau, gegebenenfalls zusammen mit einer Holzlasur.

Patentansprüche für Spanien:

1. Verfahren zur Herstellung von wäßrigen Imprägnierungsmitteln für Holz oder Holzwerkstoffe, enthaltend ein wasserlösliches Trägermaterial und Holzschutzwirkstoffe sowie in der Imprägniertechnik übliche Zusatzstoffe, dadurch gekennzeichnet, daß man wasserlösliche Trägermaterialien aus Addukten von Maleinsäureanhydrid an trocknende Öle und/oder an die solche Öle aufbauenden ungesättigten Fettsäuren und/oder an hydroxylfreie synthetisch hergestellte Ester dieser Fettsäuren mit Di- oder Polyolen, deren Anhydridstrukturen durch Wasser und/oder vorzugsweise durch Monoalkohole mit 1 bis 10 Kohlenstoffatomen aufgeschlossen sind, und deren einer Säurezahl von 40 bis 280 mg KOH/g entsprechende Carboxylgruppen teilweise oder vollständig mit Basen neutralisiert sind, mischt, mit der Maßgabe, daß die Kombination mindestens eine Komponente mit einem Penetrationswert, wie in der Beschreibung definiert, von weniger als 2 Stunden und mindestens eine zweite Komponente mit einem Penetrationswert von mehr als 2 1/2 Stunden enthält.

2. Verfahren nach Anspruch 1, dadurch gekennzeichnet, daß man Addukte aus Fettsäuren oder Fettsäureresten mit isolierten Doppelbindungen an Maleinsäureanhydrid verwendet.

3. Verfahren nach den Ansprüchen 1 und 2, dadurch gekennzeichnet, daß man Addukte verwendet, die im untergeordneten Maß Fettsäuren oder Fettsäurereste mit konjugierten Doppelbindungen aufweisen.

4. Verfahren nach den Ansprüchen 1 bis 3, dadurch gekennzeichnet, daß man Addukte mit einem Anteil an Maleinsäureanhydrid von 5 bis 30 Gew.-%, vorzugsweise von 10 bis 25 Gew.-% bei Fettsäureestern und 20 bis 30 Gew.-% bei Fettsäuren verwendet.

5. Verfahren nach den Ansprüchen 1 bis 4, dadurch gekennzeichnet, daß man mindestens 30 Gew.-% des gut penetrierenden Anteils oder des schlecht penetrierenden Anteils verwendet.

6. Verfahren nach den Ansprüchen 1 bis 5, dadurch gekennzeichnet, daß man 50 bis 70 Gew.-% des gut penetrierenden Anteils verwendet.

7. Verwendung des wäßrigen Imprägnierungsmittels nach den Ansprüchen 1 bis 6 als Grundierungsmaterial für erinen Holzschutzaufbau, gegebenenfalls zusammen mit einer Holzlasur.

## EUROPÄISCHER RECHERCHENBERICHT

Nummer der Anmeldung

EP 87 10 9823

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| Y | DE-A-3 414 244 (DESOWAG-BAYER HOLZSCHUTZ) <br> * Ansprüche; Seite 10, Zeile 22 - Seite 12, Zeile 5; Seite 14, Zeilen 5-23; Seite 15, Zeile 15 - Seite 16, Zeile 9; Seite 17, Zeile 21 - Seite 23, Zeile 6 * <br> --- | 1-7 | B 27 K 3/50 <br> B 27 K 3/15 |
| Y | DE-A-3 005 406 (ENVIROSOL SYSTEMS INTERNATIONAL LTD) <br> * Ansprüche 1-4,7-23,25-32,34,35; Seite 12, Zeile 8 - Seite 17, Zeile 18 * <br> --- | 1-7 | |
| A | CHEMICAL ABSTRACTS, Band 102, Nr. 24, 17. Juni 1985, Seite 98, Zusammenfassung Nr. 205647n, Columbus, Ohio, US; & JP-A-60 13 504 (NIPPON ZEON CO. LTD) 24-01-1985 <br> * Zusammenfassung * <br> --- | 1-4,7 | |
| A | US-A-2 768 910 (H. KRZIKALLA et al.) <br> * Insgesamt * <br> --- | 1-4,7 | |
| A | EP-A-0 077 497 (DR. WOLMAN GmbH) <br> * Seite 1, Zeilen 13-25; Beispiel 6; Seite 4, Zeilen 11-16 * <br> ---     -/- | 1-4,7 | |

RECHERCHIERTE SACHGEBIETE (Int Cl 4)

B 27 K

Der vorliegende Recherchenbericht wurde für alle Patentansprüche erstellt.

| Recherchenort | Abschlußdatum der Recherche | Prüfer |
|---|---|---|
| DEN HAAG | 21-10-1987 | FLETCHER A.S. |

Europäisches
Patentamt

EUROPÄISCHER RECHERCHENBERICHT

0254130

Nummer der Anmeldung

EP 87 10 9823

| | EINSCHLÄGIGE DOKUMENTE | | Seite 2 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
| A | DE-A-3 045 943 (NIPPON OIL CO. LTD)<br>* Ansprüche; Seite 5, Zeile 9 - Seite 7, Zeile 13 *<br><br>--- | 1-4,7 | |
| A | DE-B-2 601 618 (AKZO GmbH)<br><br>* Spalte 1, Zeile 49 - Spalte 2, Zeile 42; Spalte 5, Zeile 58 - Spalte 7, Zeile 40 *<br><br>--- | | |
| D,A | EP-A-0 137 126 (CHEMISCHE WERKE HULS AG)<br>* Seite 7, Zeilen 21-34; Seite 8, Zeile 27 - Seite 9, Zeile 10; Ansprüche *<br><br>----- | 1-4,7 | |
| | | | RECHERCHIERTE SACHGEBIETE (Int. Cl 4) |

Der vorliegende Recherchenbericht wurde für alle Patentansprüche erstellt.

| Recherchenort<br>DEN HAAG | Abschlußdatum der Recherche<br>21-10-1987 | Prüfer<br>FLETCHER A.S. |
|---|---|---|